Europäisches Patentamt

European Patent Office

Office européen des brevets

(19)

(11) Numéro de publication : **0 059 662**
**B1**

(12) **FASCICULE DE BREVET EUROPÉEN**

(45) Date de publication du fascicule du brevet :
**17.10.84**

(21) Numéro de dépôt : **82400307.3**

(22) Date de dépôt : **22.02.82**

(51) Int. Cl.³ : **B 01 F 15/06**, F 16 L 41/08

(54) Dispositif de mélange homogène de liquides en écoulement à des températures différentes.

(30) Priorité : **24.02.81 FR 8103633**

(43) Date de publication de la demande :
**08.09.82 Bulletin 82/36**

(45) Mention de la délivrance du brevet :
**17.10.84 Bulletin 84/42**

(84) Etats contractants désignés :
**BE DE GB IT NL**

(56) Documents cités :
AT-B- 306 070
DE-A- 2 337 738
DE-A- 2 805 576
DE-A- 2 907 694
FR-A- 1 527 195
FR-A- 2 014 728
GB-A- 559 956
US-A- 2 563 002
US-A- 3 409 274
V.D.I. ZEITSCHRIFT, volume 101, 1er décembre 1959;
no. 34, K. PAWLIK "Ein neues Verfahren zur Regelung der Dampfüberhitzung" pages 1635, 1636

(73) Titulaire : **STEIN INDUSTRIE Société anonyme dite:**
**19-21, Avenue Morane Saulnier B.P. 74**
**F-78141 Velizy-Villacoublay (FR)**

(72) Inventeur : **Roger, Gérard**
**l'Hermitage**
**F-78790 Hargeville (FR)**
Inventeur : **Marsault, Jean Jacques**
**23, Rue des Corps Saints**
**F-78730 Arnoult en Yvelines (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

L'invention se rapporte à un dispositif de mélange homogène de liquides en écoulement à des températures différentes. On rencontre un tel problème de mélange de liquides notamment dans les centrales nucléaires utilisant un métal liquide comme fluide caloporteur ; dans ce type de centrale, une partie du métal est prélevée du circuit principal et dirigée vers un échangeur de chaleur, puis le métal ainsi refroidi est réinjecté dans le circuit principal. Il est bien connu que le mélange entre le métal chaud, du circuit principal et le métal refroidi s'effectue mal et l'on constate dans le conduit principal des zones de stratification selon la température.

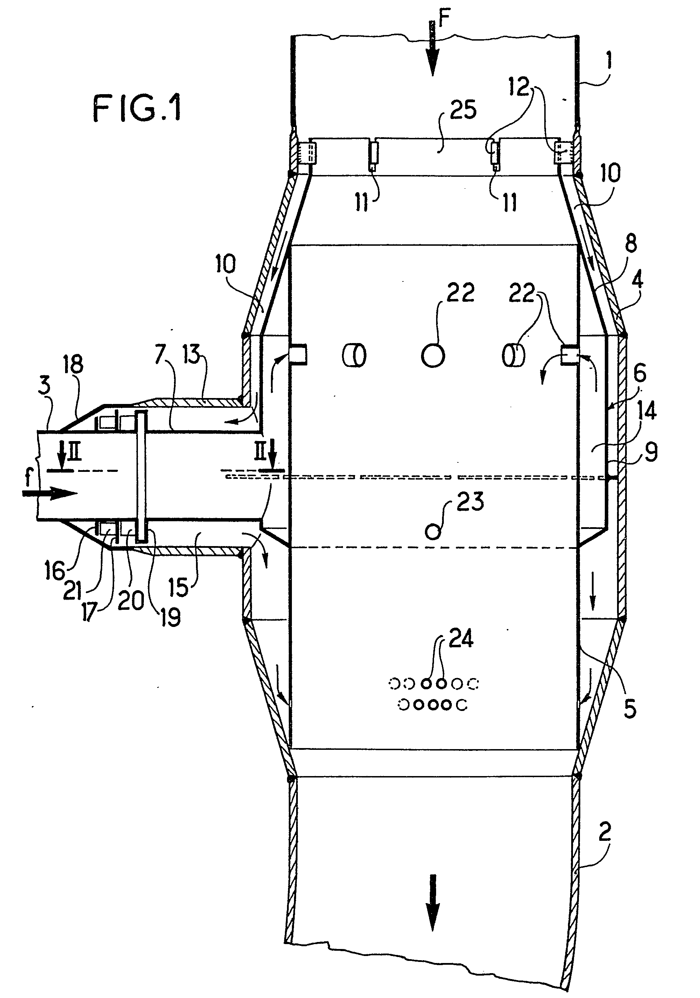

Des dispositifs de mélange homogène de métaux liquides en écoulement à des températures différentes, tels que les liquides caloporteurs des centrales nucléaires utilisant un réacteur du type à neutrons rapides, existent déjà. L'un d'eux est décrit dans le brevet allemand DE-A-2 805 576 du 10 février 1978. Le mélangeur de ce brevet est un appareil en forme de T comportant deux conduits ouverts à angle droit et trois orifices 1, 2, 3 (fig. 1) d'entrée ou de sortie des liquides à mélanger. Dans le conduit principal entouré de deux chambres annulaires périphériques, on trouve un tube de mélange 5 percé de trous 7 et un tube de chocs 6. Les tubes 5 et 6 précédents ont la liberté de se déplacer selon leur axe en fonction de leur état de dilatation. Dans cet appareil toutefois, il n'y a pas de réchauffage du liquide froid par le liquide chaud avec leur mélange direct dans le tube 5.

Le but de la présente invention est d'obtenir un mélange sans stratification de liquides en écoulement à des températures différentes.

L'invention a pour objet un dispositif de mélange homogène de liquides en écoulement à des températures différentes, comportant un corps relié à un tube d'entrée et à un tube de sortie d'un circuit principal dans lequel circule un liquide chaud, une entrée cylindrique du corps étant reliée à un tube secondaire d'un circuit secondaire dans lequel circule un liquide froid, un circuit cylindrique fixé de façon étanche au corps du côté sortie de celui-ci et comportant dans sa paroi cylindrique des ouvertures du côté du tube d'entrée, caractérisé par le fait qu'une enveloppe, constituée à partir du tube d'entrée par une partie cylindrique, une partie tronconique et un cylindre, entoure le conduit cylindrique, cette enveloppe étant ouverte seulement du côté amont et la partie tronconique réalisant avec le conduit cylindrique une jonction étanche, cette enveloppe ménageant un espace annulaire avec ledit conduit cylindrique sur une partie de celui-ci située du côté du tube d'entrée et comportant lesdites ouvertures, cette enveloppe ménageant également avec le corps un premier canal annulaire communiquant avec le tube d'entrée, qu'un tube de raccordement relié au tube secondaire et au cylindre ménage, avec l'entrée cylindrique du corps, un deuxième canal annulaire communiquant avec le premier canal annulaire, et que le conduit cylindrique comporte, dans une partie non entourée par l'enveloppe du côté du tube de sortie, une série de trous.

D'autres caractéristiques et avantages de l'invention ressortiront de la description qui va suivre d'un exemple de réalisation d'un dispositif de mélange homogène de liquides illustré par les figures annexées dans lesquelles :

la figure 1 représente en coupe et en élévation, un dispositif de mélange de l'invention,

la figure 2 est une coupe II-II partielle du dispositif de mélange de la figure 1.

Dans la figure 1 qui représente en élévation et en coupe un dispositif de mélange de l'invention, 1, 2, 3 sont des tubes raccordés à un corps 4, en T ; les tubes 1 et 2 font partie d'un circuit principal dans lequel un liquide chaud, du sodium par exemple, circule dans le sens indiqué par une flèche F ; le tube 3 fait partie d'un circuit secondaire, et le liquide froid, du sodium, circule dans le sens indiqué par une flèche f. L'expression liquide froid signifie que le liquide venant du circuit secondaire est à une température inférieure, de quelques degrés, à celle du liquide chaud, dans le cas de sodium fondu circulant dans le circuit principal. A l'intérieur du corps 4, un dispositif de mélange est constitué par un conduit cylindrique 5, une enveloppe 6 et un tube de raccordement 7. Le conduit cylindrique 5 a une extrémité solidaire de façon étanche du corps, côté sortie du liquide chaud, son diamètre étant pratiquement égal à celui du tube 2 solidaire du corps côté sortie du liquide chaud. L'enveloppe 6 comprend une partie tronconique 8 prolongée par un cylindre 9. La partie tronconique 8 coiffe de manière étanche le conduit cylindrique 5 à son extrémité non fixée au corps, et se termine par une partie cylindrique 25 qui débouche dans le conduit principal, au niveau du raccordement du tube 1 avec le corps 4 ; cette partie tronconique et le cylindre 9 ménagent un premier canal annulaire 10 entre eux et le corps, ce canal communiquant avec le circuit principal côté du tube 1 ; la partie tronconique 8 est positionnée dans le corps de manière non rigide ; à cet effet la partie cylindrique 25 comporte des fentes 11 dans lesquelles s'engagent des pattes 12 solidaires du corps 4. Le cylindre 9 entoure le conduit cylindrique 5, en face d'une entrée cylindrique 13 du corps raccordée au tube 3, sur une hauteur au moins égale au diamètre de l'entrée cylindrique ; le cylindre 9 est solidaire, de manière étanche et par son extrémité opposée à la partie tronconique 8, du conduit cylindrique 5, et ménage un espace annulaire 14 entre lui et le conduit cylindrique 5. Le tube de raccordement 7, de même diamètre que le tube 3 auquel il est raccordé, est également raccordé de manière étanche au cylindre 9 ; il ménage un deuxième canal annulaire 15 entre lui et l'entrée cylindrique 13 du corps. A partir de son raccordement avec le tube 3, le tube de raccordement 7 comporte deux anneaux 16, 17 qui lui sont perpendiculaires et qui ne viennent pas au contact d'une paroi de raccordement 18 reliant le tube 3 à l'entrée cylindrique 13 du corps 4, puis un soufflet 19, circulaire, absorbant les variations de longueur du tube de raccordement 7 en fonction de la température. Le soufflet 19 comporte du côté de l'anneau 17 des ailettes 20 disposées régulièrement autour du tube de raccordement 7 ; de même l'anneau 17 comporte, du côté de l'anneau 16, des ailettes 21 disposées régulièrement autour du tube de raccordement 7. Les ailettes 20 et 21 sont dans des plans passant par l'axe du tube de raccordement 7. Le conduit cylindrique 5 comporte, entre le tube 1 et l'extrémité cylindrique 13 du corps 4 une rangée de tubes 22 disposés régulièrement sur une circonférence ; ces tubes, de faible longueur par rapport au diamètre du conduit cylindrique, sont entièrement situés à l'intérieur de celui-ci. A la partie inférieure de l'espace annulaire 14, le conduit cylindrique 5 comporte également deux tubes 23 diamétralement opposés et situés dans un plan perpendiculaire à l'entrée cylindrique 13 du corps 4. Enfin, le conduit cylindrique 5 comporte, à sa partie inférieure, des trous 24 répartis sur deux rangées, la section totale de ces trous étant pratiquement équivalente à la section du premier canal circulaire 10 à son entrée, c'est-à-dire à la partie cylindrique 25.

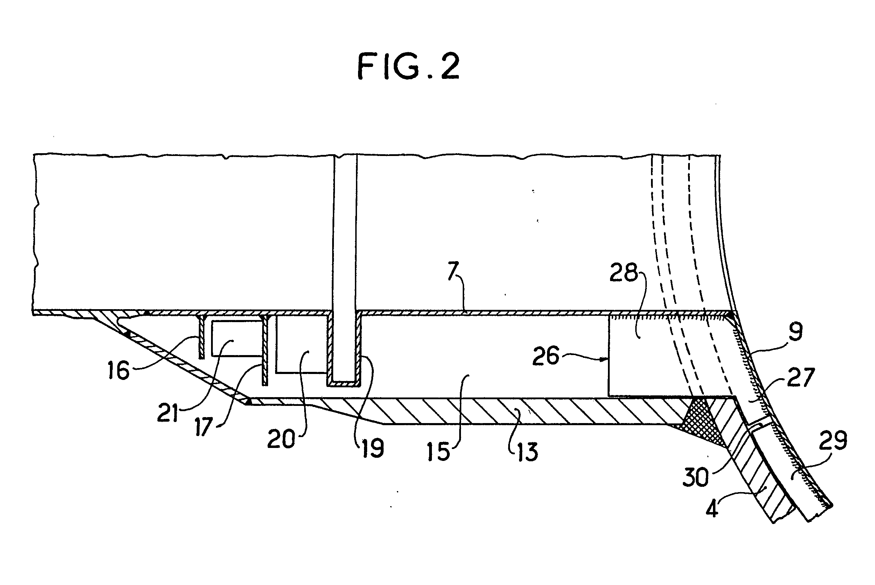

La figure 2 représente une vue partielle d'une coupe dans le plan II-II de la figure 1. On y voit un déflecteur 26, solidaire du cylindre 9 et du tube de raccordement 7, dont une partie 27 s'étend jusqu'au corps 4 et une autre partie 28 s'étend jusqu'à l'entrée cylindrique 13, la partie 28 s'étendant en direction du soufflet 19 pour obstruer partiellement le deuxième canal circulaire 15. Cette figure ne représentant qu'une moitié de l'entrée cylindrique 13, il y a également un autre déflecteur symétrique au déflecteur 26 par rapport au tube de raccordement 7. Un secteur 29, solidaire du cylindre 9 s'étend jusqu'au corps 4 ; entre les deux déflecteurs 26, autour du cylindre 9 et dans le premier canal annulaire 10, il y a un certain nombre de secteurs séparés entre eux et séparés des déflecteurs 26, afin de ménager, dans le premier canal annulaire 10, des passages 30 pour le liquide chaud qui y circule ; ces passages sont de préférence de faibles dimensions, la distance entre deux secteurs, ou un secteur et un déflecteur, étant de l'ordre du 1/100 de la longueur d'un secteur ; le nombre des secteurs est de l'ordre d'une dizaine par exemple.

La majeure partie du liquide chaud arrivant par le tube 1 traverse directement le conduit cylindrique 5 en direction du tube 2.

L'autre partie du liquide chaud circule dans le premier canal annulaire 10 et réinjectée dans le conduit cylindrique 5 par les trous 24. Du côté de l'entrée cylindrique 13 le liquide chaud venant par le premier canal annulaire 10 circule autour du tube de raccordement 7 dans le deuxième canal annulaire 15 ; on remarquera que la présence des deux déflecteurs 26, figure 2, force le liquide chaud à circuler en direction du soufflet 19, mais que le soufflet 19, les anneaux 16, 17 et les ailettes 20 et 21 créent à l'extrémité de l'entrée secondaire une zone statique pour le liquide chaud, afin d'obtenir un gradient de température entre le liquide chaud dans cette zone statique et le liquide chaud arrivant par le premier canal annulaire 10 ; ceci permet donc d'obtenir tout le long du tube de raccordement 7, depuis son raccordement avec le tube 3 du circuit secondaire, une température croissante. Le liquide froid arrivant par le tube 3 est donc réchauffé au cours de son trajet le long du tube de raccordement 7, avant de pénétrer dans l'espace annulaire 14 pour être réinjecté dans le liquide chaud par les tubes 22 et les deux tubes 23. L'espace annulaire 14 étant en contact par le cylindre 9 et la partie tronconique 8, avec le liquide chaud circulant dans le premier canal annulaire 10, et par le conduit cylindrique 5 avec le liquide chaud du circuit principal, le liquide froid arrivant dans l'espace annulaire 14 se trouve encore réchauffé avant sa réinjection dans le liquide chaud. Le dispositif de mélange de l'invention permet de réchauffer le liquide froid et d'éviter des stratifications en fonction de la température après réunion du liquide froid et du liquide chaud, notamment dans le cas de sodium liquide utilisé dans les circuits de refroidissement des centrales nucléaires.

## Revendications

1. Dispositif de mélange homogène de liquides en écoulement à des températures différentes, comportant un corps relié à un tube d'entrée (1) et à un tube de sortie (2) d'un circuit principal dans lequel circule un liquide chaud, une entrée cylindrique (13) du corps étant reliée à un tube secondaire (3) d'un circuit secondaire dans lequel circule un liquide froid, un conduit cylindrique (5) fixé de façon étanche au corps du côté sortie de celui-ci et comportant dans sa paroi cylindrique des ouvertures du côté du tube d'entrée, caractérisé par le fait qu'une enveloppe (6) constituée, à partir du tube d'entrée, par une partie cylindrique (25) une partie tronconique (8) et un cylindre (9) entoure le conduit cylindrique (5), cette enveloppe (6) étant ouverte seulement du côté amont et la partie tronconique (8) réalisant avec le conduit cylindrique (5) une jonction étanche, cette enveloppe (6) ménageant un espace annulaire (14) avec ledit conduit cylindrique (5) sur une partie de celui-ci située du côté du tube d'entrée (1) et comportant lesdites ouvertures, cette enveloppe (6) ménageant également avec le corps (4) un premier canal annulaire (10) communiquant avec le tube d'entrée (1), qu'un tube de raccordement (7) relié au tube secondaire (3) et au cylindre (9) ménage avec l'entrée cylindrique (13) du corps, un deuxième canal annulaire (15) communiquant avec le premier canal annulaire (10), et que le conduit cylindrique (5) comporte dans une partie non entourée par l'enveloppe (6), du côté du tube de sortie (2), une série de trous (24).

2. *Dispositif de mélange homogène de liquides* selon la revendication 1, caractérisé par le fait que le tube de raccordement (7) comporte, du côté du tube secondaire (3) et dans le deuxième canal annulaire (15), un soufflet (19), des anneaux (16, 17) entourant ledit tube de raccordement et des ailettes (20, 21) perpendiculaires aux anneaux.

3. Dispositif de mélange homogène de liquides selon la revendication 1, caractérisé par le fait qu'il comporte, dans un plan diamétral du tube de raccordement (7) et perpendiculaire au conduit cylindrique (5), deux déflecteurs (26), chaque déflecteur ayant une partie (28) obstruant l'espace du deuxième canal annulaire (15) compris entre le tube de raccordement (7) et l'entrée cylindrique (13) sur une partie de la longueur du tube de raccordement et une autre partie (27) obstruant l'espace compris entre le corps (4) et le cylindre (9), à proximité du raccordement du corps et de l'entrée cylindrique.

4. Dispositif de mélange homogène de liquides selon la revendication 1, caractérisé par le fait que le premier canal annulaire (10) comporte, dans un plan diamétral du tube de raccordement (7) et perpendiculaire au conduit cylindrique (5), des secteurs (29) espacés les uns des autres et s'étendant du cylindre (9) au corps (4).

5. Dispositif de mélange homogène de liquides selon la revendication 1, caractérisé par le fait que les ouvertures sont des tubes (22) dirigés vers l'intérieur du conduit cylindrique (5).

6. Dispositif de mélange homogène de liquides selon la revendication 1, caractérisé par le fait que la série de trous (24) a une surface équivalente à celle du premier canal annulaire (10) a son entrée située côté du tube d'entrée (1) et constituée par un espace annulaire compris entre le corps (4) et la partie cylindrique (25) de l'enveloppe (6).

7. Dispositif de mélange homogène de liquides selon la revendication 4, caractérisé par le fait que l'espace séparant deux secteurs (29) consécutifs est égal au 1/100 de la largeur d'un secteur, les secteurs étant identiques.

## Claims

1. Apparatus for homogeneously mixing flowing liquids having different temperatures, comprising a body connected by an inlet tube (1) and an outlet tube (2) to a main circuit in which a hot liquid circulates, a cylindrical inlet (13) to the body connected by a secondary tube (3) to a secondary circuit in which a cold liquid circulates, a cylindrical conduit (5) fixed in fluid-tight manner at the outlet end of the body and having, in its cylindrical wall, openings to the side inlet tube, characterised by an sleeve (6) comprising, starting from the inlet tube, a cylindrical portion (25), a frusto-conical portion (8) and a cylinder (9) surrounding the cylindrical conduit (5), said sleeve (6) being open only at the upstream end, and the frusto-conical portion (8) forming a fluid-tight junction with the cylindrical conduit (5), said sleeve (6) defining an annular space (14) with said cylindrical conduit (5) over a part of the latter at the end adjacent the inlet tube (1) and comprising said openings, said sleeve (6) also defining, with body (4), a first annular duct (10) communicating with the inlet tube (1), by a linking tube (7) connected to the secondary tube (3) and to cylinder (9) and defining, with the cylindrical inlet (13) of the body, a second annular duct (15) communicating with the first annular duct (10), and by the cylindrical conduit (5) having a series of ports (24) in a part not surrounded by the sleeve (6) at the end adjacent the outlet tube (2).

2. Apparatus for homogeneously mixing liquids according to claim 1, characterised in that the linking tube (7) comprises, at the end adjacent the secondary tube (3) and in the secondary annular duct (15), a bellows (19), with annular flanges (16, 17) surrounding said linking tube, and having perpendicular fins (20, 21).

3. Apparatus for homogeneously mixing liquids according to claim 1, characterised in that it comprises two deflectors (26), in a plane diametric of the linking tube (7) and perpendicular to cylindrical conduit (5), each deflector having a first portion (28) obstructing the space in the second annular duct between the linking tube (7) and the cylindrical inlet (13) over a portion of the length of the linking tube, and a second portion (27) obstructing the space between the body (4) and the cylinder (9), near the junction between the body and the cylindrical inlet.

4. Apparatus for homogeneously mixing liquids according to claim 1, characterised in that the first annular duct (10) comprises, in a plane diametric of the linking tube (7) and perpendicular to the cylindrical conduit (5), sectors (29) spaced apart from one another and extending from the cylinder (9) to the body (4).

5. Apparatus for homogeneously mixing liquids according to claim 1, characterised in that the openings are tubes (22) directed towards the interior of the cylindrical conduit (5).

6. Apparatus for homogeneously mixing liquids according to claim 1, characterised in that the series of ports (24) have a surface equivalent to that of a first annular duct (10) having its inlet located adjacent the inlet tube (1) and comprising an annular space defined between the body (4) and the cylindrical portion (25) of the sleeve (6).

7. Apparatus for homogeneously mixing liquids according to claim 4, characterised in that the distance separating two consecutive sectors (29) is 1/100 of the length of a sector, the sectors being identical.

## Ansprüche

1. Vorrichtung zum homogenen Vermischen fließender Flüssigkeiten unterschiedlicher Temperaturen, mit einem Körper, der mit einem Einlaßrohr (1) und einem Auslaßrohr (2) für eine Hauptströmung verbunden ist, in der eine warme Flüssigkeit fließt, mit einem zylinderförmigen Einlaß (13) des Körpers, der mit einem Nebenrohr (3) einer Nebenströmung verbunden ist, in der eine kalte Flüssigkeit strömt, mit einer zylinderförmigen Leitung (5), die dicht mit dem Körper an dessen Auslaßseite verbunden ist und in ihrer zylinderförmigen Wand auf der Seite des Einlaßrohrs Öffnungen aufweist, dadurch gekennzeichnet, daß ein Mantel (6), der ausgehend von dem Einlaßrohr durch ein zylinderförmiges Teil (25), ein kegelstumpfförmiges Teil (8) und einen Zylinder (9) gebildet ist, die zylinderförmige Leitung (5) umgibt, wobei dieser Mantel (6) nur stromaufwärts geöffnet ist und das kegelstumpfförmige Teil (8) mit der zylinderförmigen Leitung (5) eine dichte Verbindung bildet, daß dieser Mantel (6) einen Ringraum (14) mit der zylinderförmigen Leitung (5) über einen Abschnitt derselben ausspart, der sich auf der Seite des Einlaßrohres (1) befindet und die Öffnungen aufweist, daß dieser Mantel (6) ebenfalls mit dem Körper (4) einen ersten Ringkanal (10) ausspart, der mit dem Einlaßrohr (1) in Verbindung steht, daß ein Verbindungsrohr (7), welches mit dem Nebenrohr (3) und dem Zylinder (9) verbunden ist, mit dem zylinderförmigen Einlaß (13) des Körpers einen zweiten Ringkanal (15) ausspart, der mit dem ersten Ringkanal (10) in Verbindung steht, und daß die zylinderförmige Leitung (5) in einem von dem Mantel (6) nicht eingeschlossenen Abschnitt auf der Seite des Auslaßrohr (2) eine Reihe von Löchern (24) aufweist.

2. Vorrichtung zum homogenen Vermischen von Flüssigkeiten, nach Anspruch 1, dadurch gekennzeichnet, daß das Verbindungsrohr (7) auf der Seite des Nebenrohres (3) und in dem zweiten Ringkanal (15) einen Dehnungsausgleicher (19), das Verbindungsrohr umgebende Ringe (16, 17) und senkrechte Flügel (20, 21) aufweist.

3. Vorrichtung zum homogenen Vermischen von Flüssigkeiten nach Anspruch 1, dadurch gekennzeichnet, daß diese Vorrichtung in einer Durchmesserebene des Verbindungsrohres (7) und senkrecht zu der zylinderförmigen Leitung (5) zwei Ablenkeinrichtungen (26) aufweist, von denen jede einen Teil (28), der den Raum des zweiten Ringkanals (15), der sich zwischen dem Verbindungsrohr (7) und dem zylinderförmigen Einlaß (13) befindet, über einen Teil der Länge des Verbindungsrohres verbaut, und einen anderen Teil (27) umfaßt, der den Raum zwischen dem Körper (4) und dem Zylinder (9) in der Nähe der Verbindung des Körpers und des zylinderförmigen Einlasses verbaut.

4. Vorrichtung zum homogenen Vermischen von Flüssigkeiten nach Anspruch 1, dadurch gekennzeichnet, daß der erste Ringkanal (10) in einer Durchmesserebene des Verbindungsrohres (7) und senkrecht zu der zylinderförmigen Leitung (5) Bogenstücke (29) aufweist, die voneinander beabstandet sind und sich von dem Zylinder (9) zu dem Körper (4) erstrecken.

5. Vorrichtung zum homogenen Vermischen von Flüssigkeiten nach Anspruch 1, dadurch gekennzeichnet, daß die Öffnungen Rohre (22) sind, die zum Inneren der zylinderförmigen Leitung (5) gerichtet sind.

6. Vorrichtung zum homogenen Vermischen von Flüssigkeiten nach Anspruch 1, dadurch gekennzeichnet, daß die Reihe von Öffnungen (24) eine Oberfläche aufweist, die derjenigen des ersten Ringkanals (10) an seinem Einlaß äquivalent ist, der sich auf der Seite des Einlaßrohres (1) befindet und von einem Ringraum gebildet ist, der zwischen dem Körper (4) und dem zylinderförmigen Teil (25) des Mantels (6) umfaßt ist.

7. Vorrichtung zum homogenen Vermischen von Flüssigkeiten nach Anspruch 4, dadurch gekennzeichnet, daß der zwei aufeinanderfolgende Bogenstücke (29) trennende Raum gleich 1/100 der Breite eines Bogenstückes ist, und daß die Bogenstücke identisch sind.

# FIG.1

1

## FIG. 2